# EUROPEAN PATENT APPLICATION

(11) **EP 4 752 854 A1**
(43) Date of publication of application: **03.06.2026**
(21) Application number: 25219225.7
(22) Date of filing: 27.11.2025
(51) Int. Cl.: G06V 20/52, A23L 5/00, G06V 20/68

(54) **MONITORING FOOD PREPARATION**

(30) Priority: 28.11.2024 GB 202417547
(71) Applicant: Orderly Limited, Derby DE1 2RJ (GB)
(72) Inventor: EVANS, Peter Jonothon, Derby, DE1 2RJ (GB); SMITH, Adam, Derby, DE1 2RJ (GB)
(74) Representative: Crowell & Moring U.K. LLP

(57) **Abstract**

There is provided a computer-implemented method for monitoring a food preparation process. The method comprises receiving an input identifying a composite food product to be prepared, the preparation of the composite food product comprising a plurality of prescribed processing steps. The method further comprises receiving visual data from an image sensor, the visual data tracking the preparation of the composite food product. The method further comprises identifying, for a first processing step of the plurality of processing steps, a first subset of the visual data that tracks the performance of that processing step. The method further comprises comparing the first subset of the visual data to a first baseline condition for the performance of the first processing step. The method further comprises determining, from the comparison, that a difference between the first subset of the visual data and the first baseline condition fails a predetermined threshold condition and generating a signal indicative that the food preparation process has been unsuccessful.

## Description

The present application relates to a system and a computer-implemented method for monitoring a food preparation process.

### Background

Quick Service Restaurants (QSRs) are food establishments that focus on providing fast, convenient, and affordable meals to consumers. These establishments typically offer a limited menu featuring items such as burgers, sandwiches, fried foods, and pizza. The items are quickly prepared and may include one or more pre-made ingredients. The operation of a QSR is typically managed by human oversight.

Due to their fast preparation times, QSRs sometimes experience lapses in quality control. Specifically, QSRs often struggle to maintain consistency in the products that they produce, to comply with food safety standards and to ensure ingredient quality. Limitations in human oversight may be a contributing factor to these inconsistencies.

A specific growing concern for QSRs is allergen management. It is essential that consumers that inform a QSR of an allergy that they have to a particular ingredient do not have those ingredients incorporated into their foods. Close attention to and observation of the preparation of meals for allergen-sensitive consumers is crucial to avoid health implications for the consumers. Severe allergic reactions, sometimes resulting in death, have been observed on occasions where this high level of observation has not been present.

Due to the increasingly high requirements being placed on QSRs to monitor their food preparation and to avoid the incorporation of unwanted allergens into their products, it is necessary to provide a more robust method of supervising food preparation than the current methods that are reliant on human oversight alone.

### Summary

The invention is defined by the claims. This summary is provided to introduce a selection of concepts in a simplified form that are further described below in the detailed description. This summary is not intended to identify key features or essential features of the claimed subject matter, nor is it intended to be used to determine the scope of the claimed subject matter; variants and alternative features which facilitate the working of the invention and/or serve to achieve a substantially similar technical effect should be considered as falling into the scope of the invention disclosed herein.

In a first aspect there is provided a computer-implemented method for monitoring a food preparation process, the method comprising: receiving an input identifying a composite food product to be prepared, the preparation of the composite food product comprising a plurality of prescribed processing steps; receiving visual data from an image sensor, the visual data tracking the preparation of the composite food product; identifying, for a first processing step of the plurality of processing steps, a first subset of the visual data that tracks the performance of that processing step; comparing the first subset of the visual data to a first baseline condition for the performance of the first processing step; determining, from the comparison, that a difference between the first subset of the visual data and the first baseline condition fails a predetermined threshold condition; and generating a signal indicative that the food preparation process has been unsuccessful.

The input may be a word identifying the composite food product.

The input may be received from a local computer.

The input may be received from a smart device.

The image sensor may be a single 360-degree camera.

The visual data may track the food preparation process over a plurality of distinct spatial locations.

Comparing the first subset of the visual data to the first baseline condition may comprise analysing the first subset of the visual data and comparing a result of the analysis of the first subset of the visual data to the first baseline condition.

The visual data may be a plurality of video frames, each video frame comprising a plurality of pixel data values.

The analysis of the first subset of the visual data may comprise an analysis of a number of frames in the first subset of the visual data, and the first baseline condition is a predetermined number of frames.

The predetermined threshold condition may be that the number of frames should be less than or equal to the first baseline condition.

The predetermined threshold condition may be that the number of frames should be greater than or equal to the first baseline condition.

The analysis of the first subset of the visual data may comprise the identification of a constituent component of the composite product in the one or more frames of the first subset of the visual data.

The first baseline condition may be that the constituent component is added to the composite food product.

The first baseline condition may be that a predetermined quantity of the constituent component is added to the composite food product.

The first baseline condition may be derived from a machine learning model.

The machine learning model may be trained using supervised learning.

The method may comprise comparing the first subset of the visual data to a plurality of distinct baseline conditions.

The method may further comprise monitoring the food preparation process using the image sensor.

The method may further comprise retrieving a stored summary of the preparation process for the composite food product, the stored summary identifying each of the processing steps in the preparation process.

Identifying the first subset of the visual data may comprise comparing the visual data to the stored summary of the preparation process.

The input may further comprise a tag identifying a modification that should be made to one or more of the plurality of prescribed processing steps.

The tag may indicate that a constituent component of the composite food product should be excluded from the preparation of the product at the first processing step.

The first baseline condition may be that the component is excluded from the first processing step.

The received visual data may be a continuous stream of visual data.

The signal may be a command for a local computing device to output a visual and/or audible alarm.

The signal may be a command for the food preparation process to be terminated.

The method may further comprise receiving visual data identifying the recipient of the composite food product.

The signal indicative that the food preparation process has been unsuccessful may comprise a command for a local computing device to output the visual data identifying the recipient of the product.

In a second aspect there is provided an apparatus for monitoring a food preparation process, the system comprising a computer comprising computer-implemented logic perform a method comprising: receiving an input identifying a composite food product to be prepared, the preparation of the composite food product comprising a plurality of prescribed processing steps; receiving visual data from an image sensor, the visual data tracking the preparation of the composite food product; identifying, for a first processing step of the plurality of processing steps, a first subset of the visual data that tracks the performance of that processing step; comparing the first subset of the visual data to a first baseline condition for the performance of the first processing step; determining, from the comparison, that a difference between the first subset of the visual data and the first baseline condition fails a predetermined threshold condition; and generating a signal indicative that the food preparation process has been unsuccessful.

The apparatus may further comprise a device comprising the image sensor.

In a third aspect there is provided computer readable code configured to cause the method described above to be performed when the code is run.

The preferred features may be combined as appropriate, as would be apparent to a skilled person, and may be combined with any of the aspects of the invention.

### Brief Description of the Drawings

Examples of the invention will be described, by way of example, with reference to the following drawings, in which:
Figure 1 is a flow diagram illustrating a method of monitoring a food preparation process as described herein;
Figure 2 illustrates a flow diagram illustrating a first detailed example of the method of monitoring of figure 1;
Figure 3 illustrates a computer-implemented system for monitoring a food preparation process as described herein.

### Detailed Description

Examples of the present invention are described below by way of example only. These examples represent the best mode of putting the invention into practice that are currently known to the Applicant although they are not the only ways in which this could be achieved. The description sets forth the functions of the example and the arrangement of components for constructing and operating the example. However, the same or equivalent functions and sequences may be accomplished by different examples.

The invention described herein is a method for monitoring a food preparation process. The invention addresses the problem of ensuring that quality control in a food preparation area, such as the kitchen of a QSR, is maintained. Some examples of the invention may additionally address the problem of ensuring that the incorporation of allergens into the food of allergen-sensitive consumers is avoided. Whilst the invention is described with reference to a QSR, it should be understood that the invention may alternatively be used in other food establishments, such as regular restaurants or warehouses that prepare composite food products. The invention may also be used to monitor the preparation process for non-edible objects.

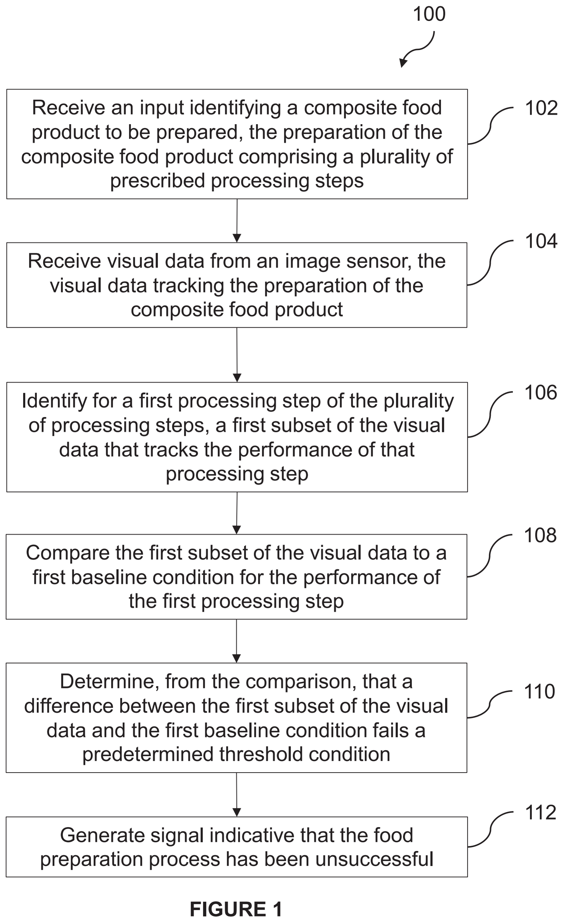

An example of a method according to the invention is illustrated in figure 1. The method 100 of figure 1 comprises a number of distinct processing steps 102, 104, 106, 108, 110 and 112. The method 100 is a computer-implemented method. That is, the method 100 of figure 1 is performed by a computer. The method 100 of figure 1 may be performed by either hardware or logic components of a computer. The method 100 of figure 1 may be performed by software in machine-readable form on a tangible storage medium e.g., in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc. and do not include propagated signals. The software can be suitable for execution on a parallel processor or a serial processor such that the method steps may be carried out in any suitable order, or simultaneously.

At a first step 102 the input identifying a composite food product to be prepared is received by the computer. A composite food product is a product suitable for human consumption that is comprised of two or more constituent components, or ingredients. Examples of composite food products are hot drinks (e.g., coffee, hot chocolate, etc.), sandwiches, pizzas and other fast-food meals. The preparation of a composite food product comprises a plurality of prescribed processing steps. The term "plurality" means two or more. Thus, the preparation of the composite food product comprises two or more steps. The preparation of the composite food product, without modifications, follows a predetermined process comprising two or more steps. The predetermined process may otherwise be referred to as a recipe. Each processing step for the composite food product is a specific action, or sub-process, that contributes to the preparation of the product. For example, where the composite food product is a cappuccino coffee, the plurality of processing steps required to prepare that product may comprise five steps: 1. the grinding of coffee beans, 2. the brewing espresso, 3. the pouring of the espresso into a cup, 4. the steaming of milk and 5. the pouring of milk into the espresso cup.

The input may be received at step 102 by the computer via any suitable means. In some examples, the input 102 may be inputted directly into the computer via an input device that is connected to the computer. The input device is an auxiliary device that is local to the computer. A local device is a device that does not require access to a network to connect to the computer. The input device may be connected to the computer via either wired or wireless means. The input device may be a mouse, a keyboard, a touch screen or pad or any alternative form of input device. The computer may be a terminal device located in the storefront of the QSR. In this example, the input 102 may be inputted into the computer by a member of staff at the QSR via an input device. Alternatively, the input 102 may be received by the computer from a device that is remote from the computer. A remote device is a device that connects to the computer via a network. The remote device may be connected to the computer via wireless means. The remote device may be a further computer. The device may be a smart device. A smart device is an electronic device that can perform tasks autonomously or interactively. In a specific example, the smart device may be a smart speaker. In this example, the device may comprise a microphone and circuitry configured to identify keywords for composite food products and transmit those keywords as input to the computer performing the method of figure 1.

The input 102 may be an electronic signal. The input 102 may comprise any suitable form of data identifying a composite food product to be prepared. In a first example, the data may be a written word or phrase that identifies the composite food product (e.g., the word "cappuccino"). In alternative examples, the input may be a sound, visual data or a sequence of bits that identifies the composite food product. The composite food product may form part of a multi-product order that is requested by a consumer. In this example, the computer may receive an input 102 identifying multiple composite food products to be prepared and may process the data to determine the distinct composite food products identified by that data. The computer may then perform the subsequent steps of the method 100 for each determined composite food product.

After receiving the input 102, the computer may retrieve a stored summary of the preparation process for the composite food product from a memory. The stored summary may identify each of the processing steps in the preparation process for the product. The memory from which the summary is obtained may be an internal memory of the computer. The memory may alternatively be external to the computer. In this latter example, the memory may be local to the computer (e.g., an external hard drive) or remote from the computer (e.g., in the cloud). The summary may also be referred to the recipe for the composite food product. The summary may comprise a list of steps in the preparation process for the product. The summary may alternatively or additionally comprise visual data that visually identifies each step in the preparation process for the product. The summary may be an indication, generated by machine learning, that is used to identify the features in a set of visual data that identify each step in the preparation process for the product.

Next, at step 104, the computer receives visual data from an image sensor. The image sensor may be any suitable type of image sensor, such as a charged-coupled device (CCD) or a complementary metal-oxide semiconductor (CMOS) sensor. The visual data may be received from the image sensor via either a wired or a wireless communication. The visual data may be received from a device comprising the image sensor. The device may be either local to or remote from the computer. The device may be a camera. The camera may be any suitable type of camera. In a specific example, the camera is a 360-degree camera. An advantage of the use of a 360-degree camera is that it has a wide field of view and can therefore track the preparation of a composite food product through a number of different spatial locations. This also means that a single camera can be used to track the entire food preparation process. Thus, in this example, the visual data received at step 104 is received from a single image sensor. Using a single image sensor reduces cost and complexity of the apparatus that performs the method of figure 1.

In another example, the visual data may be received at step 104 from a plurality of image sensors. In this example, the apparatus may comprise a plurality of devices comprising image sensors (e.g., a plurality of cameras). A single image sensor may be used to observe each distinct step in the preparation of the composite food product.

The visual data may be received in the form of a video stream. The visual data may be a plurality of video frames. That is, the visual data may comprise one or more frames of visual data. Each frame of visual data may be a static image. Each static image may reflect the field of view of an image sensor at a distinct point in time. Each frame of visual data may comprise a plurality of data values. The data values may be pixel values. The pixel values may be greyscale pixel values, or colour pixel values. The received visual data may form part of a continuous stream of visual data. The one or more frames of image data may be consecutive frames of data that are captured at regular time intervals by the image sensor. Each frame of image data may be captured at a predefined time interval after its previous frame. If the received visual data forms part of a continuous stream of visual data, this allows a food preparation area for a composite food product to be continuously monitored.

As mentioned above, the visual data may track the preparation of a composite food product throughout a preparation area in which that product is being processed (e.g., the kitchen of a QSR). That is, the visual data may track the food preparation process over a plurality of distinct spatial locations. In other words, the visual data may track the preparation of the product through two or more locations (or sites) within the preparation area. Each location, or site, within the preparation area may be a site at which a specific step of the preparation process is performed. Where the food product is a cappuccino, for example, the espresso brewing step may be performed at a first location within the preparation area, and the milk steaming step may be performed at a second location within the preparation area. It is preferable to perform different processing steps at different locations within a preparation area to avoid confusion and/or cross-contamination of constituent ingredients of the product. By obtaining data tracking the preparation of the food product through different locations, the apparatus described herein can ensure that quality control is maintained for the entirety of the processing timeline. In alternative examples, one or more steps of the preparation process for the composite food product may be performed at the same spatial location.

The visual data may be received by the computer in substantially real time. That is, the visual data may be received by the computer at substantially the same time as it is recorded. The term "real-time" means that data is received within a matter of milliseconds of the recording of that data. This means that image data can be processed immediately after it is recorded, which means that the time taken for the computer to react to the processing of that data is short.

In some examples, the computer-implemented method of figure 1 may further comprise the monitoring of the food preparation process itself. In other words, the method may comprise generating image data tracking the preparation process for the composite food product. In this example the method comprises capturing, by an image sensor, image data that or tracks the food preparation process. The image sensor may be comprised within a device, such as a camera. The method may further comprise transmitting, by a device comprising the image sensor, the image data to the computer. The method may comprise capturing, by a plurality of image sensors, image data that or tracks the food preparation process. The method may further comprise transmitting, by the devices comprising the image sensors, the image data to the computer. The transmission of the image data may be performed by the device(s) comprising the image sensor(s).

After the visual data has been received, the computer then identifies, at step 106, a first subset of the visual data that tracks the performance of that processing step for a first processing step of the plurality of processing steps required to produce the composite food product. That is, at step 106 the computer identifies a group of visual data values that identifies a specific processing step in the preparation of the composite food product. The first subset of visual data may be one or more frames of visual data. The first subset of visual data may be a group of pixel values comprised within a frame of visual data. The first subset of visual data may be a plurality of groups of pixel values, each group of pixel value comprised within a respective frame of visual data.

The computer may identify the first subset of the visual data via any suitable means. In a first example, the computer may be configured to compare the visual data a stored summary of the preparation process. The stored summary may be the summary that is retrieved by the computer by a memory as described above. As described above, the summary may comprise a list of steps in the preparation process for the product. The summary may comprise a list of word data, each word identifying a step in the preparation process. The summary may alternatively or additionally comprise visual data that visually identifies each step in the preparation process for the product. The summary may be an indication, generated by machine learning, that is used to identify the features in a set of visual data that identify each step in the preparation process for the product. The summary may comprise other form of suitable data that identifies the distinct steps in the preparation process for the composite food product.

The summary may define one or more features of each processing step in the preparation process. That is, each step of the preparation process for the composite food product may have at least one feature associated with it that is comprised within the stored summary. The at least one feature may be the presence of a constituent component, or ingredient, involved in the processing step. The at least one feature may be a temperature at which the processing step is performed. The at least one feature may be a location at which movement is detected, indicating that the processing step is performed. The at least one feature may be an action, or gesture, that is performed during the processing step. The at least one feature may be any alternatively suitable feature that can be used to identify a specific processing step in the preparation process for the composite food product. The at least one feature, for each processing step, may be a plurality of features. For example, for a first processing step, the at least one feature may comprise the presence of a constituent component and an action to be performed at that step. In the example where the composite food product is a cappuccino, the step of espresso brewing may be identified by the features of espresso as a constituent product, and the action of a worker using a coffee machine. The feature/combination of features used to identify a processing step in the preparation process may be different for each processing step.

The stored summary may cross-reference each step of the preparation process against an indication of one or more features that define that step. The indication of the one or more features may be stored as a written list in the stored summary. The indication of the one or more features may alternatively be stored as a sequence of images (e.g., a video stream) identifying each feature. The indication of one or more features may alternatively be stored as computer code that identifies each feature.

At step 106, the computer may identify a subset of image data as tracking a first processing step in the food preparation process by matching an indication of a feature defining that processing step to the visual data. The computer may identify a subset of image data as tracking the first processing step if a single feature from the visual data matches the first processing step (e.g., if it is determined that the visual data contains an action performed at a specific location within the field of view of the image sensor). The computer may identify a subset of image data as tracking the first processing step if more than a certain number of features from the visual data match the first processing step (e.g., if two constituent components are identified in the visual data).

The first processing step defined with respect to figure 1 may be any step in the preparation process for a composite food product. In a first example, the first processing step may be the first chronological step in the preparation process. In a second example, the first processing step may be the second chronological step in the preparation process.

Once the subset of image data identifying the first processing step has been determined, then at step 108 the computer compares that subset of image data is compared to a first baseline condition for the performance of the first processing step. The baseline condition may be obtained from a memory that is internal to or remote from the computer, as described above with respect to the stored summary. The baseline is compared to a control, or standard, condition for the performance of the first processing step. The baseline is used to demonstrate the correct performance of a processing step. The image data is therefore compared to the baseline to determine whether the processing step captured by that data has been performed correctly. The baseline condition may be any suitable feature, or condition, to which the visual data can be compared to determine whether the processing of the composite food product has been performed correctly.

Comparing the first subset of the visual data to the first baseline condition may comprise analysing the first subset of the visual data and comparing a result of the analysis of the first subset of the visual data to the first baseline condition. That is, the comparison may comprise performing calculations on the first subset of data to identify features that should be compared against the first baseline condition. The features of the first subset of data to be identified is dependent on the baseline condition that they are to be compared against. In first example, the first baseline condition may be a length of time. In this example, the feature of the first subset of the visual data that is to be compared against the first baseline condition may be the length of time encapsulated by the subset. Where the visual data is a plurality of frames, the length of time encapsulated by the subset is calculated using the number of frames in the subset. Thus, in this example, the analysis of the first subset of the visual data comprises an analysis of a number of frames in the first subset of the visual data. If the visual data is obtained as a constant stream of data, such that each frame of data is captured at a predetermined time interval after its preceding frame, then a multiplication of the number of frames of the first subset by the time interval separating consecutive frames of data will provide the length of time captured by the data. In the example where the food product to be prepared is a cappuccino, an example of a processing step for which the baseline condition may be a predetermined length of time is the espresso brewing step. Alternatively to being a length of time, the first baseline condition may be a predetermined number of frames. The comparison operation where the baseline condition is a predetermined number of frames is simpler than the operation in the example where the condition is a length of time, as no multiplication is required.

An alternative example of a baseline condition to which the visual data may be compared is the addition of a constituent component (i.e., ingredient) of the composite food product at the first processing step. In this example, the analysis of the first subset of the visual data may comprise the identification of a constituent component of the composite product in the one or more frames of the first subset of the visual data. Alternatively or additionally to this example, the first baseline condition is that a predetermined quantity of the constituent component is added to the composite food product. The baseline condition may alternatively be a maximum shelf life of a constituent component (e.g., the expiry date of the component, the amount of time that the component has been outside of a fridge or freezer). In other examples, explained in more detail below, the baseline condition may be that the specific component is not added to the composite food product.

In some examples, the method comprises comparing the first subset of the visual data to a plurality of distinct baseline conditions. That is, the memory accessed by the computer may store a plurality of baseline conditions for the first preparation step. The memory accessed by the computer may store, or have access to, a plurality of baseline conditions for each of the plurality of preparation steps in the food preparation process. The computer may compare the first subset of visual data to each of the baselines associated with the processing step. Comparing the first subset of the visual data to a plurality of distinct baseline conditions is advantageous as it allows for multiple features of each processing step in a food preparation process to be analysed to determine whether each feature is correct. If one of the features is incorrect, then the processing step has not been performed correctly.

The method then proceeds to step 110 at which it is determined, from the comparison of the first subset of data to the baseline condition, that a difference between the first subset of the visual data and the first baseline condition fails a predetermined threshold condition. The predetermined threshold condition is established with respect to the baseline condition. that is, the predetermined threshold condition defines whether a feature of the subset of visual data should be less than, less than or equal to, greater than, greater than or equal to, or substantially the same as the baseline condition. The threshold condition may be different for each baseline condition. "Substantially the same as" may mean that a feature of the first subset of data is the same as the baseline condition within a predefined range (e.g., that the length of time portrayed by the subset of data is the same as the baseline condition within +/-10% of the condition).

In the example where the baseline condition is a predetermined number of frames, the predetermined threshold condition may be that the number of frames should be less than, or less than or equal to, the first baseline condition. That is, the threshold condition should be that the length of time of the processing step should be less than, or less than or equal to, the baseline condition. In the espresso brewing example, the threshold condition would be that the espresso was not brewed for longer than the baseline condition (i.e., the baseline length of time). In alternative examples, the predetermined threshold condition may be that the number of frames should be greater than, or greater than or equal to, the first baseline condition. That is, the threshold condition should be that the length of time of the processing step should be greater than, or greater than or equal to, the baseline condition. In the espresso brewing example, the threshold condition would be that the espresso was not brewed for shorter than the baseline condition (i.e., the baseline length of time).

In the example where the method comprises comparing the first subset of visual data to a plurality of baseline conditions, then each baseline condition will have a corresponding predetermined threshold condition associated with it. For example, a first baseline condition of the incorporation of an ingredient at the first processing step will have a first threshold condition that that ingredient should be added at the first processing step. A second baseline condition of the amount of time to complete the processing step may have a second threshold condition that the amount of time demonstrated in the visual data should be less than that condition. In this example, if the threshold condition is failed for any of the comparisons between the visual data and a corresponding baseline condition, the method proceeds to step 112.

If it is determined, from the comparison, that a difference between the first subset of the visual data and the first baseline condition fails a predetermined threshold condition, then at step 112 the computer generates a signal indicative that the food preparation process has been unsuccessful. The signal is an electrical impulse that is generated by the computer. The signal may be output directly by the computer. The signal may be transmitted, or output, by the computer to a device that is external to the computer. The signal may be transmitted, or output, to an output device that is connected to the computer. Alternatively, the signal may be transmitted to an internal component of the computer. The signal is a command for a component to indicate that the food preparation process has been unsuccessful. In some examples, the signal is a command for the component to output an alarm. The alarm may be an audible alarm, such as a siren. The alarm may be a visual alarm, such as a flashing light. The alarm may be both an audible and a visible alarm.

The signal may be output to a computing device that is local (i.e., connected without a network) to the computing device. In other examples, the signal may be output to a component that is remote (i.e., connected without a network) from the computer. In these examples, the signal may be a command for the component to output an audible and/or visual alarm. In other examples, the signal may be a command for a mitigating action to be performed. That is, in some examples, the signal may be a command to hinder the food preparation process. In some examples, the food preparation process to be terminated. That is, the signal may be a command for a component that is performing a processing step of the food preparation process to stop physically stop that processing step. The component may be a cooking appliance. The signal (i.e., command) may be sent to the cooking appliance directly, or alternatively may be sent to an auxiliary component that is configured to indirectly deactivate the cooking appliance. Examples of cooking appliances that may be deactivated by the command, either directly or indirectly, are ovens, mixing machines, brewing machines, food processors and conveyor mechanisms that transport the food product between food preparation sites. In some examples, the signal may comprise a command for a component to output an alarm and also a command to deactivate one or more components that are performing a performing step of the food preparation process.

In some examples of the invention, the baseline condition may be derived using artificial intelligence (Al). That is, the one or more baseline conditions may be derived using a machine learning model. The machine learning model is a computer-implemented model that is able to learn and adapt to data that it receives without following explicit instructions. The model is configured to use its own algorithms and statistical models to analyse patterns in data. The machine learning algorithm may be trained using a stored summary (e.g., a recipe) relating to a composite food product, but may learn and adapt to data that it receives that relates to each step of the summary. The advantage of using a machine learning algorithm is that it allows the computer to generate a baseline condition that accounts for variations in the condition that may be observed from the visual data. In other words, the machine learning model allows the computer to identify a range of variation in a feature observed in the visual data as corresponding to the baseline condition. The use of a machine learning model thereby provides a more robust food preparation monitoring system which is able to operate without user input.

An example of a feature for which a machine learning model may generate a baseline condition using a range of variations of that feature, in the example where the baseline condition is the addition of a constituent component (i.e., ingredient) to the composite food product, is the variations in the packaging of that product. For example, if the product on which the baseline condition is based is espresso, the machine learning model may be trained to identify multiple different brands of packaging as comprising espresso, such that any bag of espresso that is used during the food preparation process is determined to be espresso by the computer. The model may further be trained to acknowledge variations in a feature that it hasn't seen before (e.g., identifying an espresso packaging brand that it hasn't seen before as espresso). Another example of a range of feature for which a baseline condition with a range of variations may be generated is the performance of a specific action (e.g., a cutting action). In this example, the model may be trained using multiple different videos of cutting actions so that it is able to identify any cutting action performed during the food preparation process as such. The machine learning model may be used to generate baseline conditions for any alternative feature of a processing step of the food preparation process.

The machine learning algorithm may be trained using supervised learning. Supervised learning uses labelled data sets to train algorithms that classify data or predict outcomes accurately. Thus, the machine learning algorithm may be trained using multiple labelled data sets indicating variations in a baseline condition (e.g., the addition of a constituent component, the performance of an action). The machine learning algorithm may be trained using images. The images may be static images or moving images (e.g., video). The machine learning model may alternatively be trained using any other suitable type of learning.

Similarly to the above, in examples where the first subset of images is identified using a known feature of a first processing step, the identification of that feature may also be derived from machine learning. That is, in some examples the first subset of images may be determined using a machine learning model (i.e., artificial intelligence). This may be done similarly to as is described above with respect to the baseline condition. For example, where the feature identifying the first processing step is an ingredient that is added at that step, the model may be trained to identify multiple variations of that ingredient as indicating the occurrence of the step.

In some examples, the input that is received by the computer further comprises a tag identifying a modification that should be made to one or more of the plurality of prescribed processing steps. That is, the input may comprise an indication that a change should be made to one or more of the processing steps (e.g., the first processing step) for the composite food product. The tag may be added to the input in response to a consumer indicating that they'd like a modification to be made to their food product. The modification, or change, may be any suitable type of modification. For example, the modification may relate to the temperature of the product (e.g., an extra-hot coffee) or to the quantity of an ingredient (e.g., extra vanilla syrup). As the tag is received within the input that is received by the computer, it may be transmitted by a device that is located within, local to or remote from the computer in the same way as the input. In some examples, the computer may implement a specific baseline condition based on the received tag. In other examples, the computer may adapt its baseline condition based on that tag. The adaptation of the baseline could be implemented by a machine learning algorithm. The adaptation of the baseline could alternatively be implemented using pre-stored data relating to the modification.

A specific example of a modification to the composite food product that may be indicated by the tag is the exclusion of a specific allergen from the product. That is, in a specific example of the method described in figure 1 the computer may receive an input including a tag (e.g., "no dairy") indicating that a constituent component of the composite food product should be excluded from the preparation of the product. In this example, the method of figure 1 is further configured to identify the incorporation of an allergen into a composite food product and, if the allergen is identified, to output a signal to prevent that food product from being provided to its consumer.

In the example where the tag indicates that a constituent component of the composite food product should be excluded from the preparation of the product at the first processing step, then a baseline condition that is compared to the first subset of the visual data is that the constituent component is excluded from the first processing step. That is, where the tag indicates that the constituent component that should be avoided is dairy, and the processing step is a milk frothing step for a cappuccino, the first baseline condition is that the milk that is frothed at that processing step is not dairy milk. The baseline condition may be that a carton of dairy milk is not detected during the performance of the frothing processing step. In this example, the visual data may be compared to the baseline condition to establish whether a carton of dairy is not present. The baseline condition may be that the milk in the frother is a certain colour, or a certain consistency. Any alternative baseline condition may be used to ensure that a constituent ingredient is not added at a specific processing step. As described above, the baseline condition may be generated using a machine learning algorithm. Thus, in the milk frothing example, the computer may be configured to identify multiple variations of dairy milk (e.g., different brand packaging for milk cartons) and identify them as milk.

In further examples, the variation of the method of figure 1 described above may further comprise monitoring a food preparation area for cross-contamination. That is, if a tag indicating a specific allergen is received by the computer, the computer may be configured to determine, for each step of the food preparation process (even the steps that do not comprise the allergen) whether the allergen is present in the visual data for that step. For example, where the allergen is milk, each subset of visual data relating to a processing step of the food preparation process may be compared to the baseline condition to determine whether milk is present. An advantage of this approach is that, for consumers with more severe allergies, it ensures that the food product that is provided to them has not come in contact with their allergen during its preparation.

The method of figure 1 may further comprise tracking a recipient, or consumer, of a composite food product after they have received their composite food product. That is, the recipient may be tracked as they move through one or more locations after they have received the product. In this example, the computer further receives pictorial information, after it has generated its signal, that visually identifies the recipient of the composite food product. Tracking the recipient may comprise the computer identifying, from a set of images or frames captured by an image sensor, the composite food product and subsequently identifying a consumer that is holding the product. Tracking the recipient may further comprise using facial recognition or an alternative tracking mechanism on the pictorial information to track the recipient's location as they move with the product. The pictorial information used to track the recipient may be received from a different image sensor than the data used to monitor the food preparation process.

The method of figure 1 may further comprise the computer outputting the pictorial information of the recipient of the food product. The visual data may be output on a component of the computer, or on a device that is local to or remote from the computer. In a specific example, the pictorial information is output on a visual interface. The pictorial information is information that identifies the consumer. In an example, the pictorial information may display the face of the recipient. In a further example, the pictorial information may display the clothing worn by the recipient. The pictorial information may be any other form of data that identifies the recipient of the composite food product. Outputting data identifying the recipient of the composite food products enables workers at the establishment to intercept the recipient, on receiving an alarm from the computer, to inform them that their food product has been prepared unsuccessfully.

The method of figure 1 has so far been described with reference to a single processing step in the preparation of a composite food product. However, it should be appreciated that steps 106-110 of figure 1 can be performed for each step in the preparation of a composite food product. That is, a subset of visual data may be identified for each step in the food preparation process, and each subset of visual data may be compared to at least one baseline condition that corresponds to its processing step.

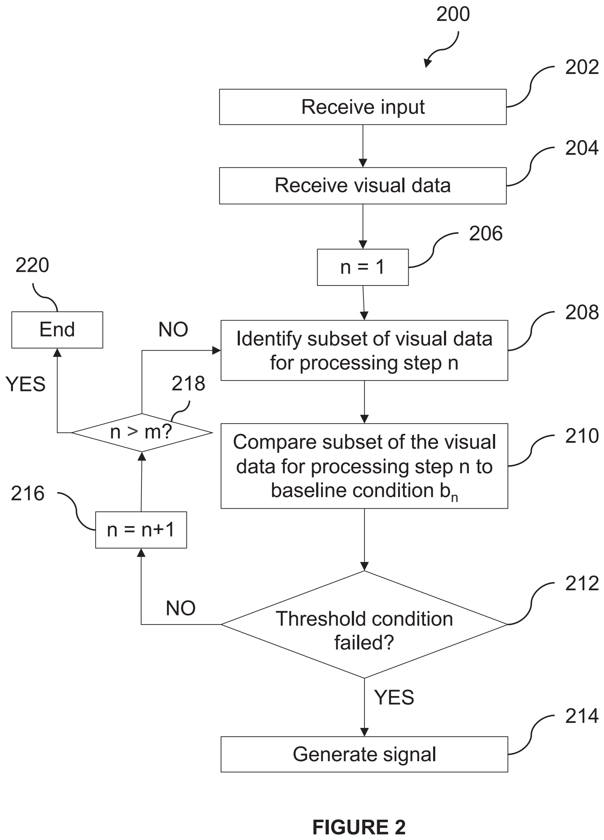

An example of the method illustrated in figure 1 which is performed for the entirety of a food preparation process is illustrated in figure 2. In this example, the identifying, comparing and determining steps of figure 1 are performed iteratively for each step in the preparation process for a composite food product.

The method of figure 2, as with that of figure 1, begins at step 202 when the computer receives an input identifying a composite food product to be prepared. The input is received either directly by the computer or from a device that is local to or remote from the computer. After the input has been received, the computer receives visual data 204 from an image sensor identifying the preparation of the composite food product. Specifically, at step 204 visual data identifying each step of the preparation process for the food product is received by the computer. This data may be obtained in real time. The data may be processed in real time.

In the method of figure 2, each processing step of the food preparation process is performed in order. Thus, at step 206 of figure 2, the first step in the food preparation process is selected. The computer may assess each step in the preparation process in turn using a counter. The counter may initialise, at the beginning of method 200, with a value of n=1, wherein n is the number of the step in the food preparation process that is to be analysed. Once n has been determined as one, then at step 208 a subset of visual data corresponding to the first processing step is identified. That is, at step 208 a first subset of the visual data that tracks the performance of that processing step is identified. This data may be identified by identifying movement at a first processing station corresponding to the first processing step. The data may alternatively be identified by identifying features corresponding to that step, as described above with respect to figure 1.

At step 210, the first subset of visual data is compared to a baseline condition b₁ (where n=1) for the processing step. At this step, the first subset of visual data may be analysed, and the analysis of the data may be compared to the baseline condition. In some examples, the first subset of visual data may be compared to a plurality of baseline conditions for the first processing step. The baseline conditions may be determined using machine learning, as described above. After comparison step 210, it is determined at step 212 whether the predetermined threshold condition is failed by the visual data. As illustrated in figure 1, if the threshold condition is determined to be failed, then at step 214 a signal is generated by the computer that indicates that the food preparation process has been unsuccessful.

It may be determined, at step 212, that the threshold condition has not been failed. If the threshold condition has not been failed, then it can be derived from this that the food preparation process has not, at the presently analysed step, been unsuccessful. The computer may determine for itself that the food preparation process has not been unsuccessful from the determination that the threshold condition has not been met. Alternatively, the computer may not determine that the food preparation process is not unsuccessful. If the threshold condition is not met, then the method proceeds to step 216 where the counter of the computer is increased by one. Thus, the second step of the food preparation process is to be considered.

After the counter has been increased at step 216, then at step 218 a check is performed to determine whether the number on the counter (n) is greater than the total number of steps in the food preparation process (m). If n is less than or equal to m, then there are further steps in the food preparation process to be analysed and the method can continue to perform step 208 for newly numbered step n. That is, for newly numbered step n, a subset of visual data corresponding to that step is identified at step 208, the subset is compared to one or more baseline conditions at step 210, and it is determined whether the one or more threshold conditions are met at step 212. If the threshold condition is met at step 212, then a signal indicating that the food preparation process has been unsuccessful is generated at step 214. If the threshold condition is not met, then the counter is increased again at step 216 and the next step of the food preparation process is analysed.

Assuming that none of the threshold conditions are failed for the baseline conditions of each processing step in the food preparation process, steps 208, 210, 212, 216 and 218 are performed repeatedly for each step of the process until step 212 has been performed for the final step in the food preparation process. Then, at step 216, the counter is increased by 1. At step 218, the number on the counter (n) is compared to the total number of steps in the food preparation process (m). At this point, newly numbered n is greater than m. Thus, the method proceeds to 220, at which it ends. If the method ends at step 220, then no signal has been generated. This means that the food preparation process has been completed successfully.

In the method of figure 2, a signal is generated at step 214 as soon as it is determined that a processing step in the food preparation process has been performed unsuccessfully. That is, the signal is generated after analysis of the first step of the preparation process that is performed unsuccessfully. This means that the food preparation process can be terminated as soon as it has been identified as unsuccessful, instead of allowing the process to continue until completion.

In an alternative example of the method illustrated in figure 2, if the food preparation process is not determined to have ended, steps 208-212 continue to be performed iteratively for each step in the food preparation process irrespective of whether a preceding step has been completed successfully. That is, if it is determined that a threshold condition has been met at step 212, then the method may proceed straight to step 216 at which a subsequent processing step of the process is analysed. This process may continue until the final iteration of step 218 at which point, if one or more steps of the preparation process has been unsuccessful, a signal is generated by the computer. If, at the final iteration of step 218, it is determined that none of the steps in the preparation process have been unsuccessful, then a signal is not generated by the computer and the method ends. An advantage of this alternative approach is that, even if the food preparation process has not been performed successfully, disruption in the food preparation area that would be caused by an alarm is minimised.

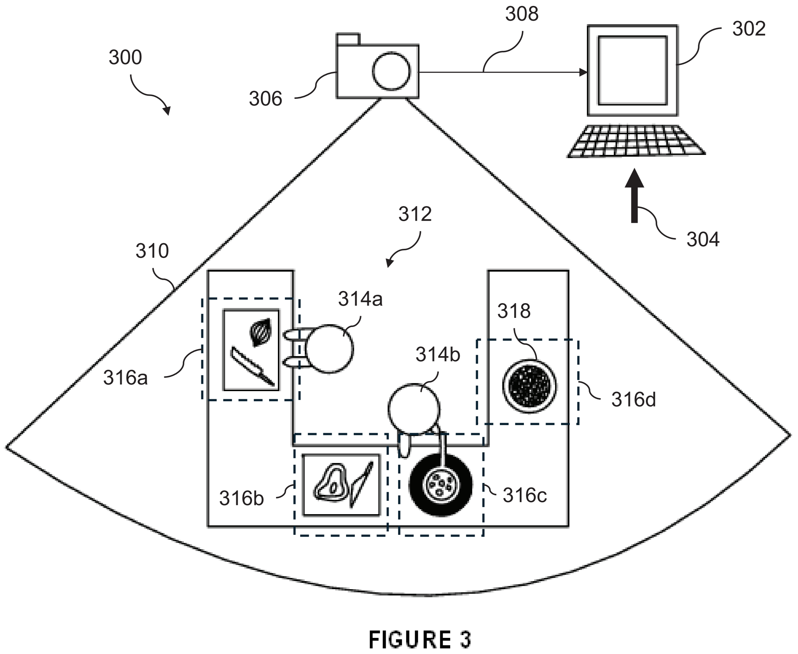

An exemplary diagram of an apparatus that is configured to perform the method described with respect to figures 1 and 2 is illustrated in figure 3. The apparatus 300 of figure 3 comprises a computer 302. The computer comprises computer-implemented logic configured to perform the method described above with respect to figures 1 and 2. The computer 302 is configured to receive an input 304 identifying a composite food product 318 to be prepared, the preparation of the composite food product 318 comprising a plurality of prescribed processing steps, as described above with respect to figures 1 and 2. The composite food product 318 is produced in a food preparation area 312. The computer may be proximal to the food preparation area; for example, the computer may be a sales terminal, or a back-end terminal located at an establishment comprising the food preparation area. Alternatively, the computer may be remote from the food preparation area.

The computer 302 is connected to a device 306 comprising an image sensor. The device 306 may be a camera. In a specific example, the device 306 may be a 360-degree camera. The image sensor may be any suitable sensor. The device 306 is connected to the computer 302 such that the computer 302 can obtain visual data 308 from the device. The device 306 may be connected to the computer 302 using wired means, such as electrical cables. The device 306 may alternatively be connected to the computer 302 using wireless means. The visual data 308 may be transmitted from the device 306 to the computer 302 via wireless communication. Alternatively, the visual data 308 may be transmitted from the device 306 to the computer 302 via wired communication. The connection of the computer 302 to the device 306 allows the computer to receive visual data from the image sensor of the device. The visual data tracks the preparation of the composite food product 318, as described above with respect to figures 1 and 2.

In the example illustrated in figure 3, the computer 302 is configured to obtain image data from a single device 306 comprising an image sensor. In alternative examples, the computer 302 may be configured to obtain image data from a plurality of devices comprising an image sensors. In some examples, each step of the preparation process for the composite food product may be monitored by a respective image sensor.

The one or more image sensors are configured to capture image data within their field of view 310. Preferably, the field of view 310 of each image sensor is a wide field of view. The image data captured by the one or more image sensors may be configured to track the preparation of the composite food product 318 over a range of different locations. As described above with respect to figure 1, each preparation step for the composite food product 318 may take place at a different site within the food preparation area. To capture the entirety of the food preparation process, the one or more image sensors are preferably configured to cover a field of view 310 that is larger than the food preparation area 312.

The food preparation area 312 from which image data is obtained may comprise a plurality of different preparation sites. Each preparation site may be attributed to a different preparation step for the composite food product. In figure 3, the food preparation area 312 comprises four preparation sites 316a, 316b, 316c, 316d. It should be appreciated that the food preparation area could comprise more or fewer than four preparation sites.

In the example of figure 3, the composite food product 318 to be prepared is a cooked meat and vegetable dish. In this example, preparation site 316a is a vegetable preparation station, preparation site 316b is a meat preparation station, preparation site 316c is a cooking station preparation site 316d is a seasoning station. In different examples, each preparation site may be dedicated to a different preparation step for the composite food product 318. The preparation step that is performed at each preparation site may be dependent on the composite food product 318 that is being prepared in the food preparation area 312. The image sensor captures actions performed at each of these four stations. The image data may be captured for each station simultaneously.

In the example of figure 3, the food preparation area is occupied by two workers 314a, 314b. The workers 314a, 314b move between the food preparation stations to compose the composite food product 318. In other examples, there may be more or fewer workers on the food preparation area. In some examples, there may be one worker located at each food preparation station. In alternative examples, there may be a single worker in the food preparation area that moves between each of the food preparation stations. The workers perform the preparation steps at each preparation station. In alternative examples, the workers could be replaced by machines. The preparation area could comprise conveyors moving food between the stations.

In the example illustrated in figure 3 there are a plurality of preparation stations dedicated to the preparation of a single composite food product 318, with each station being dedicated to a different step in the preparation of that product. It should be appreciated that, in other examples, there may be a single preparation station dedicated to the preparation of a single composite food product 318. In these latter examples, each step of the preparation process for the product is performed at the same preparation station. In these examples, the computer 302 is configured to receive image data from an image sensor that tracks the actions performed at the single preparation station.

The computer 302 is configured to receive image data from the image sensor, which captures the food preparation area. The computer 302 is then configured to identify, for a first processing step of the plurality of processing steps, a first subset of the visual data that tracks the performance of that processing step. That is, the computer 302 is configured to identify the data received from the visual sensor that corresponds to a first processing step in the production of the composite food product 318. The computer 302 may identify the first processing step by determining that an action is being performed at the first processing station 316a which is dedicated to that step. The computer 302 may identify visual data relating to action being performed at the first processing station 316a as data tracking the performance of the first processing step. Alternatively, as described above, the computer 302 may identify image data tracking the first processing step by identifying specific actions, ingredients, or other features associated with the first processing step in the data. The first subset of the visual data may be a subset of frames that are captured by the image sensor. The first subset of visual data may be a subset of pixels in one or more frames captured by the image sensor.

After identifying the subset of image data tracking the performance of the first processing step, the computer 302 is configured to compare the first subset of the visual data to a first baseline condition for the performance of the first processing step. The baseline condition may be stored within a memory of the computer 302. The baseline may be stored in a memory that is external to the computer 302. The baseline condition may be derived from machine learning. The computer may compare the first subset of the visual data to a plurality of baseline conditions.

The computer 302 is configured to determine, from the comparison, that a difference between the first subset of the visual data and the first baseline condition fails a predetermined threshold condition. This step is described above with respect to figures 1 and 2. On determining that the difference between the first subset of the visual data and the first baseline condition fails a predetermined threshold condition, the computer generates a signal indicative that the food preparation process has been unsuccessful. The signal may be a visual and/or an audible alarm. The signal may alternatively or additionally be a mitigating command, such as a command to stop one or more electrical components in the food preparation area. The command may be sent to an internal component of the computer 302, or to one or more devices that are external to the computer. The signal may be transmitted to an output device that is connected to the computer.

As illustrated in figure 3, the apparatus 300 may be capable of monitoring the preparation of multiple composite food products at the same time. In one example, the computer 302 may be able to perform the method of figure 1 for a plurality of products simultaneously. Each product that is being monitored by the computer 302 may be at a different step in its preparation process. For example, as illustrated in figure 3, a first product is being prepared at preparation station 316a, a second product is being prepared at preparation station 316b, a third product is being prepared at preparation station 316c and a fourth product is being prepared at preparation station 316d. Each preparation station 316a, 316b, 316c, 316d is being observed by the device 306 comprising the image sensor. Thus, the actions performed at each preparation station are transmitted to and processed by the computer 302 at the same time. In an optimised example of the invention, the computer 302 is configured to monitor the preparation process of a plurality of composite food products, each product being located at a different preparation station in the preparation area 312, simultaneously. The products may be the same type of composite food products. Alternatively, the products may be different types of composite food products.

In some examples the apparatus configured to perform the method of figure 3 comprises only the computer 302, which is configured to receive image data from an image sensor. In other examples, the apparatus may additionally comprise the device 306 comprising the image sensor. The computer 302 may comprise be a laptop, tablet, desktop or other computing device. In an alternative example, functions of the computer 302 may be distributed across multiple computing devices.

The computer 302 may include one or more controllers such as controller that may be, for example, a central processing unit processor (CPU), a graphics processing unit (GPU) a chip or any suitable processor or computing or computational device such as an FPGA mentioned, an operating system, a memory storing executable code (or computer readable code), storage which may be external to the system or embedded in memory, one or more input devices and one or more output devices. The computer readable code may be configured to cause the methods described above to be performed when the code is run.

One or more processors in one or more controllers such as controller may be configured to carry out any of the methods described here. For example, one or more processors within controller may be connected to memory storing software or instructions that, when executed by the one or more processors, cause the one or more processors to carry out a method according to some examples of the present disclosure. Controller or a central processing unit within controller may be configured, for example, using instructions stored in memory, to perform the method as described above.

Input devices may be or may include a mouse, a keyboard, a touch screen or pad or any suitable input device. It will be recognized that any suitable number of input devices may be operatively connected to computing system. Output devices may include one or more displays, speakers and/or any other suitable output devices. It will be recognized that any suitable number of output devices may be operatively connected to computing system. The input and output devices may for example be used to enable a user to select information, e.g., images and graphs as shown here, to be displayed.

In the examples described above, all or parts of the method may be performed by a server. The server may comprise a single server or network of servers. In some examples, the functionality of the server may be provided by a network of servers distributed across a geographical area, such as a worldwide distributed network of servers, and a user/operator of the method may be connected to an appropriate one of the network servers based upon, for example, a user location.

In the described examples of the invention parts of the system may be implemented as a form of a computing and/or electronic device. Such a device may comprise one or more processors which may be microprocessors, controllers or any other suitable type of processors for processing computer executable instructions to control the operation of the device to gather and record routing information. In some examples, for example where a system on a chip architecture is used, the processors may include one or more fixed function blocks (also referred to as accelerators) which implement a part of the method in hardware (rather than software or firmware). Platform software comprising an operating system, or any other suitable platform software, may be provided at the computing-based device to enable application software to be executed on the device.

Various functions described herein can be implemented in hardware, software, or any combination thereof. If implemented in software, the functions can be stored on or transmitted over as one or more instructions or code on any suitable computer-readable medium.

Alternatively, or in addition, the functionality described herein can be performed, at least in part, by one or more hardware logic components. For example, and without limitation, hardware logic components that can be used may include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

Although illustrated as a single system, it is to be understood that a computing device may be a distributed system. Thus, for instance, several devices may be in communication by way of a network connection and may collectively perform tasks described as being performed by the computing device. Although illustrated as a local device it will be appreciated that the computing device may be located remotely and accessed via a network or other communication link (for example using a communication interface).

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

As used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices.

Moreover, the acts described herein may comprise computer-executable instructions that can be implemented by one or more processors and/or stored on a computer-readable medium or media. The computer-executable instructions can include routines, sub-routines, programs, threads of execution, and/or the like. Still further, results of acts of the methods can be stored in a computer-readable medium, displayed on a display device, and/or the like.

It will be understood that the above description of a preferred example is given by way of example only and that various modifications may be made by those skilled in the art. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

### ANNEX

1. A computer-implemented method for monitoring a food preparation process, the method comprising:
   receiving an input identifying a composite food product to be prepared, the preparation of the composite food product comprising a plurality of prescribed processing steps;
   receiving visual data from an image sensor, the visual data tracking the preparation of the composite food product;
   identifying, for a first processing step of the plurality of processing steps, a first subset of the visual data that tracks the performance of that processing step;
   comparing the first subset of the visual data to a first baseline condition for the performance of the first processing step;
   determining, from the comparison, that a difference between the first subset of the visual data and the first baseline condition fails a predetermined threshold condition; and
   generating a signal indicative that the food preparation process has been unsuccessful.
2. The computer-implemented method of statement 1, wherein the input is a word identifying the composite food product.
3. The computer-implemented method of statement 1 or statement 2, wherein the input is received from a local computer.
4. The computer-implemented method of statement 1 or statement 2, wherein the input is received from a smart device.
5. The computer-implemented method of any preceding statement, wherein the image sensor is a single 360-degree camera.
6. The computer-implemented method of any preceding statement, wherein the visual data tracks the food preparation process over a plurality of distinct spatial locations.
7. The computer-implemented method of any preceding statement, wherein comparing the first subset of the visual data to the first baseline condition comprises analysing the first subset of the visual data and comparing a result of the analysis of the first subset of the visual data to the first baseline condition.
8. The computer-implemented method of any preceding statement, wherein the visual data is a plurality of video frames, each video frame comprising a plurality of pixel data values.
9. The computer-implemented method of statement 8 when dependent on statement 7, wherein the analysis of the first subset of the visual data comprises an analysis of a number of frames in the first subset of the visual data, and the first baseline condition is a predetermined number of frames.
10. The computer-implemented method of statement 9, wherein the predetermined threshold condition is that the number of frames should be less than or equal to the first baseline condition.
11. The computer-implemented method of statement 9, wherein the predetermined threshold condition is that the number of frames should be greater than or equal to the first baseline condition.
12. The computer-implemented method of statement 8 when dependent on statement 7, wherein the analysis of the first subset of the visual data comprises the identification of a constituent component of the composite product in the one or more frames of the first subset of the visual data.
13. The computer-implemented method of statement 12, wherein the first baseline condition is that the constituent component is added to the composite food product.
14. The computer-implemented method of statement 13, wherein the first baseline condition is that a predetermined quantity of the constituent component is added to the composite food product.
15. The computer-implemented method of any preceding statement, wherein the first baseline condition is derived from a machine learning model.
16. The computer-implemented method of statement 15, wherein the machine learning model is trained using supervised learning.
17. The computer-implemented method of any preceding statement, wherein the method comprises comparing the first subset of the visual data to a plurality of distinct baseline conditions.
18. The computer-implemented method of any preceding statement, further comprising monitoring the food preparation process using the image sensor.
19. The computer-implemented method of any preceding statement, further comprising retrieving a stored summary of the preparation process for the composite food product, the stored summary identifying each of the processing steps in the preparation process.
20. The computer-implemented method of statement 19, wherein identifying the first subset of the visual data comprises comparing the visual data to the stored summary of the preparation process.
21. The computer-implemented method of any preceding statement, wherein the input further comprises a tag identifying a modification that should be made to one or more of the plurality of prescribed processing steps.
22. The computer-implemented method of statement 21, wherein the tag indicates that a constituent component of the composite food product should be excluded from the preparation of the product at the first processing step.
23. The computer-implemented method of statement 22, wherein the first baseline condition is that the component is excluded from the first processing step.
24. The computer-implemented method of any preceding statement, wherein the received visual data is a continuous stream of visual data.
25. The computer-implemented method of any preceding statement, wherein the signal is a command for a local computing device to output a visual and/or audible alarm.
26. The computer-implemented method of any preceding statement, wherein the signal is a command for the food preparation process to be terminated.
27. The computer-implemented method of any preceding statement, wherein the method further comprises receiving visual data identifying the recipient of the composite food product.
28. The computer-implemented method of statement 27, wherein the signal indicative that the food preparation process has been unsuccessful comprises a command for a local computing device to output the visual data identifying the recipient of the product.
29. An apparatus for monitoring a food preparation process, the system comprising a computer with computer-implemented logic configured to perform a method comprising:
   receiving an input identifying a composite food product to be prepared, the preparation of the composite food product comprising a plurality of prescribed processing steps;
   receiving visual data from an image sensor, the visual data tracking the preparation of the composite food product;
   identifying, for a first processing step of the plurality of processing steps, a first subset of the visual data that tracks the performance of that processing step;
   comparing the first subset of the visual data to a first baseline condition for the performance of the first processing step;
   determining, from the comparison, that a difference between the first subset of the visual data and the first baseline condition fails a predetermined threshold condition; and
   generating a signal indicative that the food preparation process has been unsuccessful.
30. The apparatus of statement 29, further comprising a device comprising the image sensor.
31. Computer readable code configured to cause the method of any of statements 1 to 28 to be performed when the code is run.

## Claims

1. A computer-implemented method for monitoring a food preparation process, the method comprising:
receiving an input identifying a composite food product to be prepared, the preparation of the composite food product comprising a plurality of prescribed processing steps;
receiving visual data from an image sensor, the visual data tracking the preparation of the composite food product;
identifying, for a first processing step of the plurality of processing steps, a first subset of the visual data that tracks the performance of that processing step;
comparing the first subset of the visual data to a first baseline condition for the performance of the first processing step;
determining, from the comparison, that a difference between the first subset of the visual data and the first baseline condition fails a predetermined threshold condition; and
generating a signal indicative that the food preparation process has been unsuccessful.

2. The computer-implemented method of claim 1, wherein the input is a word identifying the composite food product, optionally wherein the input is received from a local computer or wherein the input is received from a smart device.

3. The computer-implemented method of claim 1 or claim 2, wherein the image sensor is a single 360-degree camera and wherein the visual data tracks the food preparation process over a plurality of distinct spatial locations.

4. The computer-implemented method of any preceding claim, wherein comparing the first subset of the visual data to the first baseline condition comprises analysing the first subset of the visual data and comparing a result of the analysis of the first subset of the visual data to the first baseline condition, optionally wherein the visual data is a plurality of video frames, each video frame comprising a plurality of pixel data values.

5. The computer-implemented method of claim 4, wherein the analysis of the first subset of the visual data comprises an analysis of a number of frames in the first subset of the visual data, and the first baseline condition is a predetermined number of frames.

6. The computer-implemented method of claim 5, wherein the predetermined threshold condition is:
that the number of frames should be less than or equal to the first baseline condition; or
that the number of frames should be greater than or equal to the first baseline condition.

7. The computer-implemented method of claim 4, wherein the analysis of the first subset of the visual data comprises the identification of a constituent component of the composite product in the one or more frames of the first subset of the visual data, optionally wherein the first baseline condition is that the constituent component is added to the composite food product, further optionally wherein the first baseline condition is that a predetermined quantity of the constituent component is added to the composite food product.

8. The computer-implemented method of any preceding claim, wherein the first baseline condition is derived from a machine learning model, and wherein the machine learning model is trained using supervised learning.

9. The computer-implemented method of any preceding claim, wherein the method comprises comparing the first subset of the visual data to a plurality of distinct baseline conditions, optionally wherein the method further comprises monitoring the food preparation process using the image sensor.

10. The computer-implemented method of any preceding claim, further comprising retrieving a stored summary of the preparation process for the composite food product, the stored summary identifying each of the processing steps in the preparation process, optionally wherein identifying the first subset of the visual data comprises comparing the visual data to the stored summary of the preparation process.

11. The computer-implemented method of any preceding claim, wherein the input further comprises a tag identifying a modification that should be made to one or more of the plurality of prescribed processing steps, optionally wherein the tag indicates that a constituent component of the composite food product should be excluded from the preparation of the product at the first processing step, further optionally wherein the first baseline condition is that the component is excluded from the first processing step.

12. The computer-implemented method of any preceding claim, wherein the received visual data is a continuous stream of visual data, and wherein the signal is a command for a local computing device to output a visual and/or audible alarm and/or a command for the food preparation process to be terminated.

13. The computer-implemented method of any preceding claim, wherein the method further comprises receiving visual data identifying the recipient of the composite food product, optionally wherein the signal indicative that the food preparation process has been unsuccessful comprises a command for a local computing device to output the visual data identifying the recipient of the product.

14. An apparatus for monitoring a food preparation process, the system comprising a computer with computer-implemented logic configured to perform a method comprising:
receiving an input identifying a composite food product to be prepared, the preparation of the composite food product comprising a plurality of prescribed processing steps;
receiving visual data from an image sensor, the visual data tracking the preparation of the composite food product;
identifying, for a first processing step of the plurality of processing steps, a first subset of the visual data that tracks the performance of that processing step;
comparing the first subset of the visual data to a first baseline condition for the performance of the first processing step;
determining, from the comparison, that a difference between the first subset of the visual data and the first baseline condition fails a predetermined threshold condition; and
generating a signal indicative that the food preparation process has been unsuccessful.

15. Computer readable code configured to cause the method of any of claims 1 to 13 to be performed when the code is run.
